# EUROPEAN PATENT SPECIFICATION

(11) **EP 3 343 314 B1**
(45) Date of publication and mention of the grant of the patent: **28.04.2021**
(21) Application number: 17150054.9
(22) Date of filing: 02.01.2017
(51) Int. Cl.: H04L 12/28, G08B 13/14, G08B 25/08, G08B 25/10, G06F 1/30, H02J 9/06

(54) **HANDLING POWER FAILURES IN A MAINS POWERED GATEWAY**
BEHANDLUNG VON STROMAUSFÄLLEN IN EINEM NETZBETRIEBENEN GATEWAY
GÉRER LES PANNES DE COURANT DANS UNE PASSERELLE ALIMENTÉE PAR UN RÉSEAU ÉLECTRIQUE

(43) Date of publication of application: 04.07.2018
(73) Proprietor: Verisure Sàrl, 1290 Versoix (CH)
(72) Inventor: Book, Johannes, 23131 Trelleborg (SE); Jacobsson, Stefan, 22467 Lund (SE)
(74) Representative: Hansson Thyresson AB

(56) References cited:
- JP-A- 2000 267 769
- US-A1- 2015 169 023
- US-A1- 2016 286 417
- US-B1- 9 032 231

## Description

### TECHNICAL FIELD

The invention relates to a method and a device for handling power failures in home wireless system. The home wireless system in general can be any type of wireless system comprising a plurality of peripheral wireless nodes, such as an intruder alarm, and a central unit. Specifically, it can be a security system having a plurality of wireless detectors sensitive to the presence or passage of persons and objects communicating with a central unit such as a gateway.

Peripheral nodes can be battery powered or mains powered. Battery powered nodes comprise monitoring systems for continuously monitoring battery status. In case of failure of such a battery powered device or node and interruption of communication the monitoring system can report battery failure as a reason for the interruption. In case of a mains powered peripheral device node disconnection from or failure of the mains power mean the communication is interrupted abruptly. If a mains powered device would stop communicating with the central unit, there can be many reasons, such as temporary communication fails (i.e. natural wireless interference), wireless jamming, physical tampering with the product, power outage or simply that the device has been disconnected.

### PRIOR ART

Home wireless systems in general comprise a plurality of wireless nodes that can be connected to a communication system through a node control unit or a control panel. An application of home wireless systems is alarm systems. Security and alarm systems used today normally comprise a control panel also referred to as a gateway that is connected to a central station, either by a telephone line or by a wireless telecommunications system such as GSM or other radio frequency systems. The connection also can be through the internet. The gateway can be provided with input means or be activated and controlled by control device such as a keypad which can be a wireless remote device.

The alarm system can be armed in different ways and into different alarm system states, such as "Disarmed", "Armed Home" and "Armed Away". If the system is set to "Disarmed" it will not alarm to perimeter or interior detectors. Still, fire detectors, other gas detectors, flooding events, power break down events and similar detectors normally will be armed also in the "Disarmed" state. If the alarm system is set to a first armed state referred to as "Armed Home" the alarm system will generate an alarm at the occurrence of a breach of a first group of selected detectors such as perimeter detectors and selected interior detectors, but not to a breach of the interior detectors in general. If the system is set to a second armed state referred to as "Armed Away" it will alarm to a breach of the perimeter or interior detectors and normally to all types of detectors.

The state of the system is determined by the needs of the occupants of the premises. If all of the occupants are leaving the premises then the alarm system should be set to "Armed Away". If the occupants will be staying within the premises for an extended period of time then the alarm system can be set to "Armed Home". This alarm setting can be appropriate for instance when the occupants are sleeping within the premises or are staying within a defined part thereof. For other scenarios the alarm system should be set to "Disarmed". Other alarm system may have different combinations of alarm states for different zones.

In the "Armed Home" state a selected group of detectors is armed. In various embodiments the selected group of detectors includes the perimeter detectors and interior detectors covering sections of the premises that are not used by the occupants. Each installation can be set up with different detectors included in the selected group.

A prior art alarm system is disclosed in US6895082 and comprises one alarm unit in combination with a line seize module. The alarm unit includes a transmitter/receiver, a control panel function, a key pad, an input/output port connected to a telephone line and an auto dialer for normally communicating with a remote monitoring station over the public switched telephone network.

The gateway of a home wireless system acts as a system or network controller in the home or in a building. A drawback of prior art systems is that a failure of the gateway can disable a complete installation of a home wireless system. In alarm systems, such a failure could be extremely inconvenient. A gateway or other peripheral unit that is powered by mains power can be provided with a battery backup to maintain operation if there is a power failure caused by disconnection from the mains or actual failure of the mains system. Drawbacks of battery backup are further complexity and higher costs. It has become apparent that devices in home wireless alarm systems that are not provided with battery backup generate a high volume of failure signals that reach alarm service every day. Many times, the reason is simply that the customer disconnected the device for various reasons, sometimes by mistake and sometimes since they need the power outlet temporarily

In prior art systems, the alarm system cannot determine if the reason for power loss is product failure, wireless interference or simply a disconnect. An object of the invention is to overcome the drawback of prior art systems and to provide a device and a method that will improve handling of power failures of mains powered devices. In accordance with the invention the wireless home alarm system will be provided with information about the reason behind any mains powered unit disappearing from networks of such alarm products. The benefit of knowing this is that more accurate action can be taken to correct the failure.

US 2016/286417 A1 discloses a customer premise equipment device that detects a power failure and reports the power failure to a centralized server in order to facilitate the diagnosis and correction of performance issues caused by the power failure. US 2015/169023 A1 discloses a method comprising detecting a power loss to an apparatus isolating the apparatus from a power supply, notifying the apparatus of the power loss, and extending operation of the apparatus for a predetermined time period using a charge reservoir. US 9032231 B1 discloses systems and methods that can detect external power unavailability via polling, operate on battery power, instruct any or all of primary and auxiliary processor(s) to enter power saving mode, monitor when external power has been restored, and instruct functional modules to resume normal operation. Power saving mode can reduce the rate of modem battery drain and thus reduce the likelihood of a service outage and extend service duration.

### SUMMARY OF THE INVENTION

The present invention is defined in the appended independent claims to which reference should be made. Advantageous features are set out in the appended dependent claims.

A home wireless system comprises a plurality of wireless nodes including a first gateway and at least one second gateway and at least one wireless peripheral device. The home wireless system forms an installation that can include a conventional home security system that comprises at least one wireless alarm detector and at least two gateways. If any of the devices or nodes fail - some action is taken, such as notifying the home owner or triggering a tamper alarm.

Normally, each gateway is also designed to operate as a system controller in relation to any external systems and a remote central monitoring station (RCMS). Gateways of the system cooperate to automatically distribute system control functions. Each gateway in a multiple gateway cooperative controls a subset of the home wireless system forming a physical installation. Each wireless peripheral device is associated or bound to one gateway for communication. Each gateway instructs all bound peripheral devices how proceed with the wireless communication. Any messages created in a peripheral device are communicated through and acknowledged by the associated gateway.

Each gateway is provided with a first set of communication means for communicating with a remote security server and with a second set of communication means for communicating with peripheral devices and other gateways. At least the second set of communication means are designed for wireless communication. Peripheral devices comprise corresponding means for wireless communication with the gateway.

All nodes share one radio frequency (RF) channel. However, each node must be able to send and receive RF messages to and from other nodes within its subset of the installation while ignoring messages from any other subset. In various embodiments each gateway acts as a master with regard to an RF network comprising the gateway and at least one wireless peripheral device. Other gateways act as masters for their respective RF network.

In various embodiments the RF channel can manually or automatically change in case of detecting noise, jamming or other RF transmission problems on the current RF channel. The peripheral devices will adapt to the channel change by logging into the new RF channel at the next transmission. Each gateway and each peripheral device it controls use specific addresses included in messages. As a result the RF networks are partitioned by a form of CDMA (Code Division Multiple Access). Each gateway will only process messages from the peripheral nodes it controls, and it will ignore messages from peripheral nodes it does not control. Likewise, each peripheral node will only process messages from its controlling gateway.

In various embodiments the gateways used in an installation have longer range of use than the wireless peripheral devices. Some reasons for a better performance can be AC mains power, better RF input filtering, better antennas, and dual radio diversity. Because of this, multiple gateways may be more likely to be able to communicate with each other, in large premises, than every node is be able to communicate with every gateway. By placing gateways strategically within premises, it can be guaranteed that every peripheral node has an adequate RF communication link with at least one gateway. In installations where the gateways can all communicate with each other, further improved system performance will be provided.

In accordance with the invention an energy storing device is connected to a mains powered device to supply energy during a time period sufficient to allow a communications unit of the mains powered device to send a message to the central monitoring unit. In various embodiments, the energy storing device is capable of storing a comparatively low amount of energy only and it is imperative that changes or drops of power supply voltage are detected promptly. In accordance with the invention, a very fast power fail detector is used. In various embodiments, a declining voltage rather than no voltage is detected. As soon as a voltage drop is detected, the mains powered device turns off all unnecessary peripherals (such as Ethernet, DECT, etc.) to save power and immediately sends a wireless power loss information message, such as "Goodbye - I'm losing power soon" to a gateway or another central unit.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic view of an installation of a home wireless system controlled in accordance with one embodiment of the invention,
- Fig. 2: is a schematic block diagram showing an embodiment of a peripheral wireless device, such as a mains powered device, comprising one embodiment of a power fail detector for handling power failures in accordance with the invention,
- Fig. 3: is a schematic circuit diagram showing one embodiment of a power fail detector for handling power failures in accordance with the invention, and
- Fig. 4: is a schematic diagram showing how different signals in the power fail detector of Fig. 3 change before, during and after a power failure.

### DETAILED DESCRIPTION

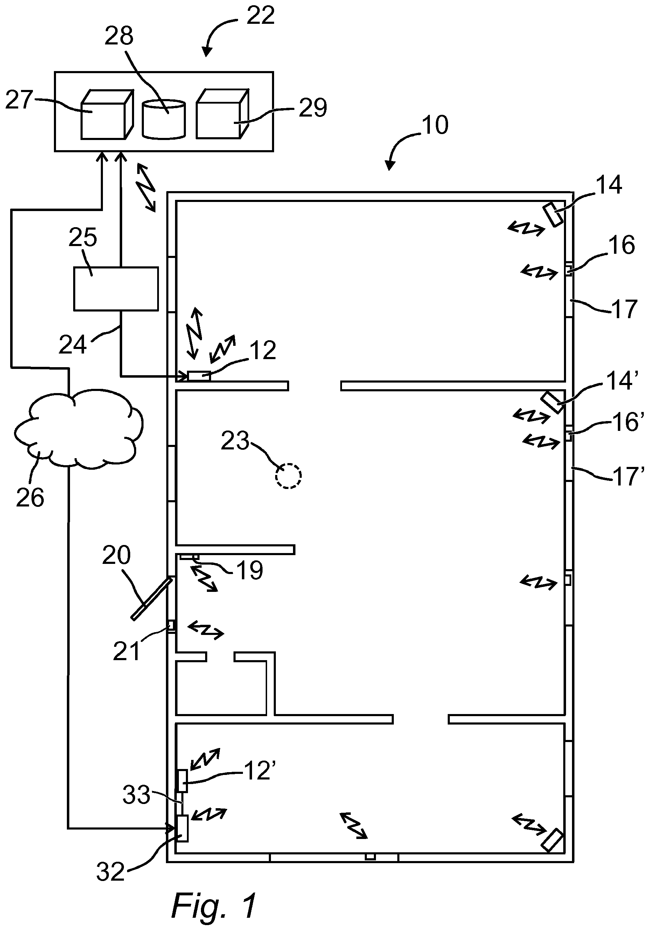

In the embodiment shown in Fig. 1 an installation comprising a home wireless system is installed in a building 10. The home wireless system is an alarm system installation and comprises a plurality of wireless peripheral nodes including wireless peripheral devices, a first gateway 12 and a second gateway 12'. The second gateway 12' is mains powered and normally is not provided with battery backup. One wireless peripheral node is a first infrared detector 14 mounted in the corner of a room close to the ceiling. The first infrared detector 14 has a sensing area that covers the first gateway 12. A first perimeter alarm detector 16 is mounted at a window 17 in the same room. The infrared detector operates in a conventional manner to detect presence and movements of objects emitting infrared radiation. The perimeter alarm detector also operates in a conventional manner to detect when a door or a window is opened. In various embodiments the perimeter alarm detector comprises a magnetic sensor that will detect when a magnet attached to the door or window is moved.

Second gateway 12' is arranged in a second room separated from the room where the first gateway 12 is arranged. A second infrared detector 14' is mounted in the same room as the second gateway 12' to cover it within its operative area and a second perimeter alarm detector 16' is mounted at a window 17' in the same room. A keypad 19 is mounted close to a front door 20 of the building 10. The keypad 19 is used by an operator of the alarm system to arm and to disarm the alarm system. The keypad 19 also is a wireless peripheral node. The front door 20 is covered by a third perimeter alarm detector 21. Another type of wireless peripheral device is a smoke detector 23 mounted in the ceiling of building. In various embodiments a plurality of smoke detectors 23 are arranged throughout the building 10 to ensure that fire can be detected at an early stage.

Depending on different circumstances the first gateway 12 and the second gateway 12' are connected to a remote central monitoring station 22 either through a wired connection 24 or through a wireless connection such as GSM or a similar digital cellular network. The connection to the remote central monitoring station 22 can also be through the internet 26. In the embodiment shown in Fig. 1, internet connection is provided through a wireless router 32 that is connected to internet by fibre, cable or Digital Subscriber Line, such as ADSL. In the embodiment shown in Fig. 1 second gateway 12' is connected by wire 33 to wireless router 32. The wired connection 24 can be part of a public switched telephone network 25. In various embodiments the remote central monitoring station 22 comprises an interface module 27, a database 28 and a web server 29. The database 28 stores installation and application data relating to the installation including all wireless network nodes and alarm settings.

The first gateway 12 can be capable of communicating with the second gateway 12' because of the more powerful radio transmitting means. By placing gateways strategically within a building it is possible to guarantee that every peripheral node has an adequate RF link with at least one gateway. As long as the gateways can all communicate with each other, the installation will function properly. To achieve full redundancy the installation should include enough gateways for every peripheral node to be able to communicate with at least two gateways.

An installation such as the alarm system shown in Fig. 1 holds a large amount of dynamic state information, such as arm state, alarm status, peripheral battery status, etc. in a total system state information dataset. Similar information is stored also in other types of home wireless systems. Each gateway or controller continuously receives inputs from different authenticated sources such as peripheral nodes, a RCMS, adjacent systems, etc. that affects a distributed state of the application or system.

In various embodiments, a second gateway can utilize the RF communication link of another gateway for tunnelling messages to a remote central monitoring station (RCMS). For example if the second gateway up-link to RCMS is very slow or unreachable, or has a higher cost, another gateway up-link can be utilized.

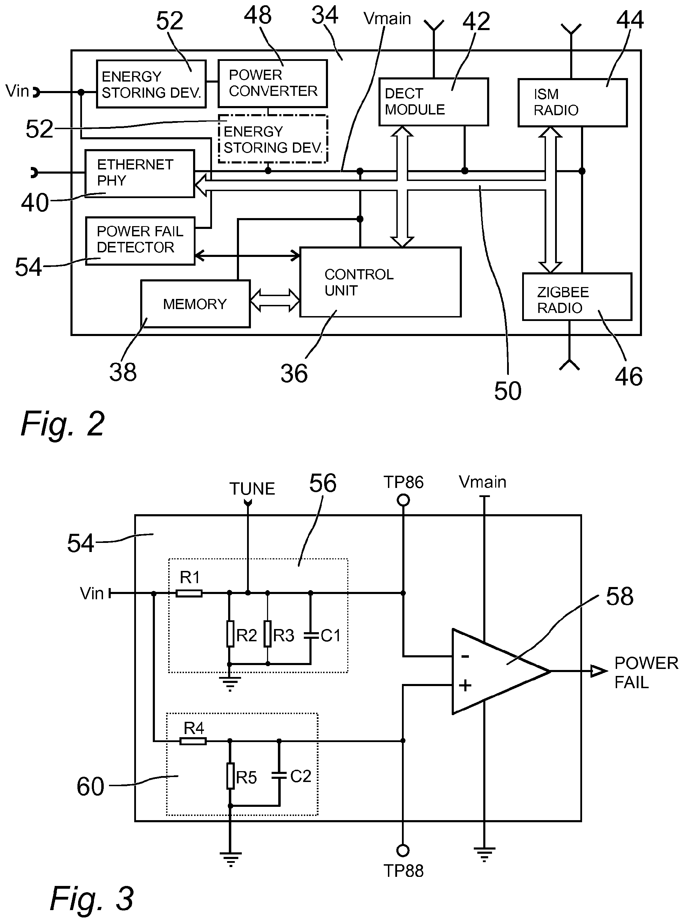

The schematic block diagram in Fig. 2 shows a mains powered device 34. In various embodiments said mains powered device 34 can be a home alarm gateway, corresponding to wireless home alarm gateway 12, 12'. Mains powered device 34 comprises a plurality of electronic units such as control unit 36, memory 38, Ethernet communication unit 40, DECT module unit 42, ISM radio unit 44 and ZIGBEE radio unit 46. Normally, electronic units of mains powered device is connected to mains outlet through a power converter 48 and a power supply unit (not shown) such as a conventional AC/DC converter or a USB charger. In various embodiments, the electronic units are connected to the control unit 36 through a bus 50 allowing data transfer in both directions. In various embodiments output voltage Vmain from power converter 48 is below 5V and normally around 3,3 V to provide a suitable voltage level to the electronic units.

In accordance with the invention the mains powered device 34 also comprises an energy storing device 52 and a power fail detector 54. In the embodiment shown in Fig. 2 energy storing device 52 is connected to mains directly through a power supply unit providing a voltage level of Vin. In various embodiments, energy storing device 52 is instead connected between power converter 48 and electronic units as indicated with dash and dot lines. Placement of energy storing device 52 may depend on type and properties of electronic components included therein.

Energy storing device 52 can be a capacitor such as an electrolytic capacitor. Capacitance value can be around 1000 µF to provide a sufficient amount of electric charge capacity. Voltage rating of the selected capacitor depends on the supply voltage. When a power supply unit providing power at about 5V is used the voltage rating should be at least 6,3 V.

The overall operation of the mains powered device is to use a power fail detector to detect a power failure and then to communicate a power loss signal before being powered down by a power failure. During a time period extending from an actual power failure to final power down an energy storing device 52 keeps the mains powered device alive, so as to allow the power loss signal to be communicated. The power fail detector 54 reacts with very short delay. To prolong up time of the mains powered device long enough power consuming electronic units of the mains powered device are turned off. In various embodiments up time after a power fail is at least 20 ms and normally about 30 ms. This up time is sufficient to allow communication of the power loss signal. Preferably, the power loss signal is communicated in a wireless message to a gateway 12, 12'. In various embodiments, the mains powered device 34 is either one of first gateway 12 or second gateway 12'.

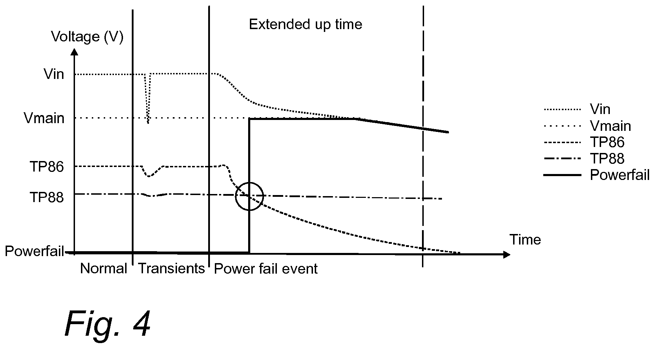

In the embodiment of a power fail detector 54 shown in Fig. 3 a first filter 56 is used to obtain a derivate of the power supply voltage level Vin. If the derivate is below a threshold value a power fail signal is transmitted to the control unit 36. First filter 56 comprises first resistor R1 in series with first capacitor C1. First capacitor C1 is connected in parallel to second resistor R2 and third resistor R3. Filter time T1 of first filter 56 is lower than 200 µs and preferably lower than 100 µs. In various embodiments filter time T1 is approximately 50 µs. To obtain this filter time suitable values of filter components are, R1=10 kΩ, R2=22 kΩ, R3=13 kΩ and C1= 10 nF. Effects of first filter is shown in Fig. 4. A drop of input voltage Vin from power supply line will be filtered by first filter 56, so as to avoid that transients of input voltage triggers output of power loss signal.

Output signal TP86 of first filter 56 is input to a first input of a linear comparator 58. When the signal or voltage level on first input is lower than signal or voltage level of a second input of linear comparator 58 an output of linear comparator 58 will switch from low to high, c.f. Fig. 4. In this context low is equal or close to ground and high is equal or close to supply voltage Vmain from power converter 48. It is possible to set the threshold of detection of power failure or the sensitivity by adding a TUNE signal to first filter 56 as indicated in Fig. 3. If the sensitivity is too high the power loss signal will be sent unnecessarily and if the sensitivity is too high time left with power may not sufficient for sending the power loss signal.

In various embodiments, a second filter 60 is used to provide a reference signal from input voltage Vin. Second filter 60 will improve the function of the power fail detector 54 when there are static variances on power supply voltage level Vin caused by power supply voltage differences or similar slowly varying voltage levels. Second filter 60 comprises fourth resistor R4 in series with second capacitor C2. Second capacitor C2 is connected in parallel with fifth resistor R5.

Filter time T2 of second filter 60 is substantially longer than filter time T1 of first filter 56 and can be 500 ms or longer. In various embodiments filter time T2 of second filter 60 is around 1000ms. To obtain this filter time suitable values of filter components are, R4=470 kΩ, C2=2,2 µF and R5=220 kΩ. Output signal TP88 of second filter 60 is input to second input of linear comparator 58.

As indicated in Fig. 4 output signal TP88 will also be affected by a varying power supply voltage level Vin. Transients of power supply voltage level Vin will affect output signal TP86 as well as output signal TP88. As indicated in Fig. 4 the drop of output signal TP86 will not trigger the power fail signal. When a true power fail event occurs power supply voltage level Vin will decrease slowly because of the energy storing device. Also the output signal at TP86 will decrease at a pace depending on first filter 56 from a level determined by the TUNE signal, c.f. Fig. 3. In various embodiments power supply voltage level Vin is 5.0 V, and as set out above output voltage Vmain from power converter 48 is below 5V and normally around 3,3 V to provide a suitable voltage level to the electronic units. At this levels a suitable setting of the TUNE signal will result in a steady state signal level of around 2,2 V at TP86. A corresponding signal level at TP88 with these settings will be around 1,6 V. The difference in signal level between TP86 and TP88 can be referred to as a predetermined threshold value.

When output signal TP86 falls below signal level at TP88 as indicate by a circle in Fig. 4 linear comparator 58 switch and output POWER FAIL will go high. This signal is received by control unit 36 and transmission of a power loss information signal will be initiated. Normally, the power loss information signal will be transmitted from a radio unit of mains powered device 34 to a corresponding radio unit of a gateway or similar control device. Other non-vital power consuming units are turned off to prolong up time of mains powered device 34. After turning of non-vital power consuming units Vin level will decrease at lower pace than before and provide an extended up time.

## Claims

1. A method of handling power failures in a mains powered first gateway (12'; 34) of a home wireless alarm system, the system comprising the mains powered first gateway (12, 34), at least one second gateway (12) and a plurality of wireless peripheral nodes, said mains powered first gateway (12'; 34) and the at least one second gateway (12) communicating with and controlling at least one of the plurality of wireless peripheral nodes and communicating with a remote central monitoring station, said mains powered first gateway (12'; 34) comprising a plurality of electronic units including a control unit (36), the method comprising the steps:
a) continuously storing energy supplied from a mains source in an energy storing device (52) of the mains powered first gateway (12'; 34),
b) continuously monitoring changes in a power supply voltage level Vin from a DC power source,
c) filtering the power supply voltage level in a first low pass filter,
d) detecting a drop of filtered power supply voltage level below a predetermined threshold value, wherein said detecting is made in a power fail detector (54) comprising a second low pass filter (60) connected to a power supply at power supply voltage level Vin to provide said threshold value, and wherein the second low pass filter (60) has a second time constant T2 that is substantially higher than a first time constant T1 of the first low pass filter (56),
e) generating a power fail signal after detecting said drop of power supply voltage level while obtaining energy from said energy storing device (52),
f) transmitting said power fail signal to the control unit of the mains powered first gateway (12'; 34), said control unit communicating a power loss information signal to the central monitoring station, and
g) reducing power consumption by turning off selected electronic units in the mains powered first gateway (12'; 34), so as to prolong operating time of said mains powered first gateway (12';34) during a time period sufficient to allow a communications unit of the mains powered device to send the power loss information signal to the central monitoring station.

2. A method as claimed in claim 1, wherein the first time constant T1 is shorter than 100 µs.

3. A method as claimed in claim 2, wherein the first time constant T1 is approximately 50 µs.

4. A method as claimed in claim 2, wherein the second time constant T2 is longer than 0,5 s

5. A method as claimed in claim 4, wherein the second time constant T2 is approximately 1 s.

6. A mains powered first gateway (12'; 34) of a home wireless alarm system comprising the mains powered first gateway (12';34), at least one second gateway (12) and a plurality of wireless peripheral nodes, said mains powered first gateway (12'; 34) being power supplied at a power supply voltage level Vin and comprising a control unit (36) and a plurality of electronic units (38, 40, 42, 44, 46), and said mains powered first gateway (12'; 34) being adapted to communicate with and to control at least one of the plurality of wireless peripheral nodes and to communicate with a remote central monitoring station,the mains powered first gateway comprising an energy storing device (52) adapted to continuously store energy supplied from a mains source, said energy storing device (52) being connected to at least a selection of said plurality of electronic units (38, 40, 42, 44, 46), a power fail detector (54) connected to said energy storing device (52) and comprising a first low pass filter (56) connected to a power supply at power supply voltage level Vin, said power fail detector (54) adapted to detect a drop of filtered power supply voltage level below a predetermined threshold value,
a control unit (36) connected to said energy storing device (52) and to said power fail detector (54) adapted to receive a power fail signal after detecting said drop of power supply voltage level, and to said electronic units, wherein said control unit (36) is arranged to reduce power consumption by turning off selected electronic units (38, 40, 42, 44, 46), so as to prolong operating time of said mains powered first gateway(12'; 34), after receiving said power fail signal, and wherein said control unit (36) is connected to a communication unit (42, 44, 46) and is adapted to communicate a power loss information signal to the central monitoring station after receiving said power fail signal while obtaining energy from said energy storing device (52) during a time period sufficient to allow a communications unit of the mains powered first gateway (12'; 34)to send the power loss information signal to the central monitoring station, and wherein said power fail detector (54) comprises a second low pass filter (60) connected to the power supply at power supply voltage level Vin to provide said threshold value, wherein the second low pass filter (60) has a
second time constant T2 that is substantially higher than a first time constant T1 of the first low pass filter (56).

7. A mains powered gateway (12; 12'; 34) as claimed in claim 6, wherein the first time constant T1 shorter than 100 µs.

8. A mains powered gateway (12; 12'; 34) as claimed in claim 7, wherein the first
time constant T1 is approximately 50 µs.

9. A mains powered gateway (12; 12'; 34) as claimed in claim 6, wherein the second time constant T2 is longer than 0,5 s.

10. A mains powered gateway (12; 12'; 34) as claimed in claim 9, wherein the
second time constant T2 is approximately 1 s.

11. A mains powered gateway (12; 12'; 34) as claimed in claim 6, wherein output signal TP86 of the first low pass filter (56) is input to a first input of a linear comparator (58) and output signal TP88 of the second low pass filter (60) is input to a second input of the linear comparator (58), and wherein an output of the linear comparator (58) provides said power fail signal.

## Patentansprüche

1. Verfahren zum Handhaben von Stromausfällen in einem netzgespeisten ersten Gateway (12'; 34) eines drahtlosen Heimalarmsystems, wobei das System das netzgespeiste erste Gateway (12, 34), wenigstens ein zweites Gateway (12) und mehrere drahtlose Endknoten umfasst, wobei das netzgespeiste erste Gateway (12'; 34) und das wenigstens eine zweite Gateway (12) mit wenigstens einem der mehreren drahtlosen Endknoten kommunizieren und diesen steuern und mit einer entfernten zentralen Überwachungsstation kommunizieren, wobei das netzgespeiste erste Gateway (12'; 34) mehrere elektronische Einheiten umfasst, die eine Steuereinheit (36) einschließen, wobei das Verfahren die folgenden Schritte umfasst:
a) fortlaufendes Speichern von Energie, die von einer Netzquelle zugeführt wird, in einer Energiespeichervorrichtung (52) des netzgespeisten ersten Gateways (12'; 34),
b) fortlaufendes Überwachen von Änderungen eines
Stromversorgungsspannungspegels Vin von einer Gleichstromquelle,
c) Filtern des Stromversorgungsspannungspegels in einem ersten Tiefpassfilter,
d) Erfassen eines Abfalls des gefilterten Stromversorgungsspannungspegels unter einen zuvor bestimmten Schwellenwert, wobei das Erfassen in einem Stromausfalldetektor (54) durchgeführt wird, der ein zweites Tiefpassfilter (60) umfasst, das mit einer Stromversorgung bei Stromversorgungsspannungspegel Vin verbunden ist, um den Schwellenwert bereitzustellen, und wobei das zweite Tiefpassfilter (60) eine zweite Zeitkonstante T2 aufweist, die wesentlich höher als eine erste Zeitkonstante T1 des ersten Tiefpassfilters (56) ist,
e) Erzeugen eines Stromausfallsignals nach Erfassen des Abfalls des Stromversorgungsspannungspegels, während Energie von der Energiespeichervorrichtung (52) erhalten wird,
f) Übertragen des Stromausfallsignals an die Steuereinheit des netzgespeisten ersten Gateways (12'; 34), wobei die Steuereinheit ein Stromverlustinformationssignal an die zentrale Überwachungsstation kommuniziert, und
g) Reduzieren des Stromverbrauchs durch Ausschalten ausgewählter elektronischer Einheiten in dem netzgespeisten ersten Gateway (12'; 34), um eine Betriebszeit des netzgespeisten ersten Gateways (12'; 34) während eines Zeitraums zu verlängern, der ausreicht, um einer Kommunikationseinheit der netzgespeisten Vorrichtung zu ermöglichen, das Stromverlustinformationssignal an die zentrale Überwachungsstation zu senden.

2. Verfahren nach Anspruch 1, wobei die erste Zeitkonstante T1 kürzer als 100 µs ist.

3. Verfahren nach Anspruch 2, wobei die erste Zeitkonstante T1 ungefähr 50 µs beträgt.

4. Verfahren nach Anspruch 2, wobei die zweite Zeitkonstante T2 länger als 0,5 s ist.

5. Verfahren nach Anspruch 4, wobei die zweite Zeitkonstante T2 ungefähr 1 s beträgt.

6. Netzgespeistes erstes Gateway (12'; 34) eines drahtlosen Heimalarmsystems, das das netzgespeiste erste Gateway (12'; 34), wenigstens ein zweites Gateway (12) und mehrere drahtlose Endknoten umfasst, wobei dem netzgespeisten ersten Gateway (12'; 34) Strom bei einem Stromversorgungspannungspegel Vin zugeführt wird und es eine Steuereinheit (36) und mehrere elektronische Einheiten (38, 40, 42, 44, 46) umfasst und das netzgespeiste erste Gateway (12'; 34) angepasst ist, um mit wenigstens einem der mehreren drahtlosen Endknoten zu kommunizieren und diesen zu steuern und mit einer entfernten zentralen Überwachungsstation zu kommunizieren, wobei das netzgespeiste erste Gateway eine Energiespeichervorrichtung (52) umfasst, die angepasst ist, um die Energie fortlaufend zu speichern, die von einer Netzquelle zugeführt wird, wobei die Energiespeichervorrichtung (52) mit wenigstens einer Auswahl der mehreren elektronischen Einheiten (38, 40, 42, 44, 46) verbunden ist, wobei ein Stromausfalldetektor (54) mit der Energiespeichervorrichtung (52) verbunden ist und ein erstes Tiefpassfilter (56) umfasst, das mit einer Stromversorgung bei Stromversorgungspannungspegel Vin verbunden ist, wobei der Stromausfalldetektor (54) angepasst ist, um einen Abfall des gefilterten Stromversorgungsspannungspegels unter einen zuvor bestimmten Schwellenwert zu erfassen, wobei eine Steuereinheit (36) mit der Energiespeichervorrichtung (52) und dem Stromausfalldetektor (54), der angepasst ist, um ein Stromausfallsignal nach dem Erfassen des Abfalls des Stromversorgungspannungspegels zu empfangen, und mit den elektronischen Einheiten verbunden ist, wobei die Steuereinheit (36) angeordnet ist, um den Stromverbrauch durch Ausschalten ausgewählter elektronischer Einheiten (38, 40, 42, 44, 46) zu reduzieren, um die Betriebszeit des netzgespeisten ersten Gateways (12', 34) nach Empfangen des Stromausfallsignals zu verlängern, und wobei die Steuereinheit (36) mit einer Kommunikationseinheit (42, 44, 46) verbunden und angepasst ist, um ein Stromverlustinformationssignal an die zentrale Überwachungsstation nach Empfangen des Stromausfallsignals zu kommunizieren, während sie Energie von der Energiespeichervorrichtung (52) während eines Zeitraums erhält, der ausreicht, um einer Kommunikationseinheit des netzgespeisten ersten Gateways (12'; 34) zu ermöglichen, das Stromverlustinformationssignal an die zentrale Überwachungsstation zu senden, und wobei der Stromausfalldetektor (54) ein zweites Tiefpassfilter (60) umfasst, das mit der Stromversorgung bei Stromversorgungsspannungspegel Vin verbunden ist, um den Schwellenwert bereitzustellen, wobei das zweite Tiefpassfilter (60) eine zweite Zeitkonstante T2 aufweist, die wesentlich höher als eine erste Zeitkonstante T1 des ersten Tiefpassfilters (56) ist.

7. Netzgespeistes Gateway (12; 12'; 34) nach Anspruch 6, wobei die erste Zeitkonstante T1 kürzer als 100 µs ist.

8. Netzgespeistes Gateway (12; 12'; 34) nach Anspruch 7, wobei die erste Zeitkonstante T1 ungefähr 50 µs beträgt.

9. Netzgespeistes Gateway (12; 12'; 34) nach Anspruch 6, wobei die zweite Zeitkonstante T2 länger als 0,5 s ist.

10. Netzgespeistes Gateway (12; 12'; 34) nach Anspruch 9, wobei die zweite Zeitkonstante T2 ungefähr 1 s beträgt.

11. Netzgespeistes Gateway (12; 12'; 34) nach Anspruch 6, wobei ein Ausgangssignal TP86 des ersten Tiefpassfilters (56) in einen ersten Eingang eines Linearkomparators (58) eingegeben wird und das Ausgangssignal TP88 des zweiten Tiefpassfilters (60) in einen zweiten Eingang des Linearkomparators (58) eingegeben wird, wobei ein Ausgang des Linearkomparators (58) das Stromausfallsignal bereitstellt.

## Revendications

1. Procédé de gestion des pannes de courant dans une première passerelle (12' ; 34) alimentée par un réseau électrique d'un système d'alarme domestique sans fil, le système comprenant la première passerelle (12 ; 34) alimentée par un réseau électrique, au moins une seconde passerelle (12) et une pluralité de nœuds périphériques sans fil, ladite première passerelle (12' ; 34) alimentée par un réseau électrique et l'au moins une seconde passerelle (12) communiquant avec au moins un nœud de la pluralité de nœuds périphériques sans fil et commandant celui-ci, et communiquant avec une station centrale de surveillance à distance, ladite première passerelle (12' ; 34) alimentée par un réseau électrique comprenant une pluralité d'unités électroniques comportant une unité de commande (36), le procédé comprenant les étapes suivantes :
a) le stockage en continu de l'énergie fournie par une source de réseau électrique dans un dispositif de stockage d'énergie (52) de la première passerelle (12' ; 34) alimentée par un réseau électrique,
b) la surveillance en continu des variations d'un niveau de tension d'alimentation en courant Vin à partir d'une source de courant CC,
c) le filtrage du niveau de tension d'alimentation en courant dans un premier filtre passe-bas,
d) la détection d'une chute de niveau de tension d'alimentation en courant filtré en dessous d'une valeur seuil prédéterminée, ladite détection étant effectuée dans un détecteur de panne de courant (54) comprenant un second filtre passe-bas (60) connecté à une alimentation en courant au niveau de tension d'alimentation en courant Vin de façon à fournir ladite valeur seuil, et le second filtre passe-bas (60) présentant une seconde constante de temps T2 qui est sensiblement supérieure à une première constante de temps T1 du premier filtre passe-bas (56),
e) la génération d'un signal de panne de courant après la détection de ladite chute de niveau de tension d'alimentation en courant, et l'obtention d'énergie provenant dudit dispositif de stockage d'énergie (52),
f) la transmission dudit signal de panne de courant à l'unité de commande de la première passerelle (12' ; 34) alimentée par un réseau électrique, ladite unité de commande communiquant un signal d'information de perte de courant à la station centrale de surveillance, et
g) la réduction de la consommation d'énergie en mettant hors tension les unités électroniques sélectionnées de la première passerelle (12' ; 34) alimentée par un réseau électrique, de manière à prolonger le temps de fonctionnement de ladite première passerelle (12' ; 34) alimentée par un réseau électrique pendant une période de temps suffisante pour permettre à une unité de communication du dispositif alimenté par un réseau électrique d'envoyer le signal d'information de perte de courant à la station centrale de surveillance.

2. Procédé selon la revendication 1, dans lequel la première constante de temps T1 est plus courte que 100 µs.

3. Procédé selon la revendication 2, dans lequel la première constante de temps T1 est d'environ 50 µs.

4. Procédé selon la revendication 2, dans lequel la seconde constante de temps T2 est plus longue que 0,5 s.

5. Procédé selon la revendication 4, dans lequel la seconde constante de temps T2 est d'environ 1 s.

6. Première passerelle (12' ; 34) alimentée par un réseau électrique d'un système d'alarme domestique sans fil comprenant la première passerelle (12' ; 34) alimentée par un réseau électrique, au moins une seconde passerelle (12) et une pluralité de nœuds périphériques sans fil, ladite première passerelle (12' ; 34) alimentée par un réseau électrique étant alimentée à un niveau de tension d'alimentation en courant Vin et comprenant une unité de commande (36) et une pluralité d'unités électroniques (38, 40, 42, 44, 46), et ladite première passerelle (12' ; 34) alimentée par un courant électrique étant configurée pour communiquer avec au moins un nœud de la pluralité de nœuds périphériques sans fil et pour commander celui-ci, et
pour communiquer avec une station centrale de surveillance à distance, la première passerelle alimentée par un réseau électrique comprenant
un dispositif de stockage d'énergie (52) configuré pour stocker en continu l'énergie fournie par une source de réseau électrique, ledit dispositif de stockage d'énergie (52) étant connecté à au moins une sélection de ladite pluralité d'unités électroniques (38, 40, 42, 44, 46), un détecteur de panne de courant (54) connecté audit dispositif de stockage d'énergie (52) et comprenant un premier filtre passe-bas (56) connecté à une alimentation en courant au niveau de tension d'alimentation en courant Vin, ledit détecteur de panne de courant (54) étant configuré pour détecter une chute de niveau de tension d'alimentation en courant filtré en dessous d'une valeur seuil prédéterminée,
une unité de commande (36) connectée audit dispositif de stockage d'énergie (52) et audit détecteur de panne de courant (54) configuré pour recevoir un signal de panne de courant après la détection de ladite chute de niveau de tension d'alimentation en courant, l'unité de commande étant également connectée auxdites unités électroniques, ladite unité de commande (36) étant agencée pour réduire la consommation de courant en mettant hors tension des unités électroniques sélectionnées (38, 40, 42, 44, 46) après la réception dudit signal de panne de courant, de manière à prolonger le temps de fonctionnement de ladite première passerelle (12' ; 34) alimentée par un réseau électrique, et ladite unité de commande (36) étant connectée à une unité de communication (42, 44, 46) et étant configurée pour communiquer un signal d'information de perte de courant à la station centrale de surveillance après la réception dudit signal de panne de courant et l'obtention d'énergie provenant dudit dispositif de stockage d'énergie (52) pendant une période de temps suffisante pour permettre à une unité de communication de la première passerelle (12' ; 34) alimentée par un réseau électrique d'envoyer le signal d'information de perte de courant à la station centrale de surveillance, et ledit détecteur de panne de courant (54) comprenant un second filtre passe-bas (60) connecté à l'alimentation en courant au niveau de tension d'alimentation en courant Vin pour fournir ladite valeur seuil, le second filtre passe-bas (60) présentant une seconde constante de temps T2 qui est sensiblement supérieure à une première constante de temps T1 du premier filtre passe-bas (56).

7. Passerelle (12 ; 12' ; 34) alimentée par un réseau électrique selon la revendication 6, dans laquelle la première constante de temps T1 est inférieure à 100 µs.

8. Passerelle (12 ; 12' ; 34) alimentée par un réseau électrique selon la revendication 7, dans laquelle la première constante de temps T1 est d'environ 50 µs.

9. Passerelle (12 ; 12' ; 34) alimentée par un réseau électrique selon la revendication 6, dans laquelle la seconde constante de temps T2 est plus longue que 0,5 s.

10. Passerelle (12 ; 12' ; 34) alimentée par un réseau électrique selon la revendication 9, dans laquelle la seconde constante de temps T2 est d'environ 1 s.

11. Passerelle (12 ; 12' ; 34) alimentée par un réseau électrique selon la revendication 6, dans laquelle le signal de sortie TP86 du premier filtre passe-bas (56) est entré sur une première entrée d'un comparateur linéaire (58) et le signal de sortie TP88 du second filtre passe-bas (60) est entré sur une seconde entrée du comparateur linéaire (58), et une sortie du comparateur linéaire (58) fournissant ledit signal de panne de courant.
